**Europäisches Patentamt**

**European Patent Office**

**Office européen des brevets**

(19)

(11) Publication number: **0 036 849**
A2

(12) # EUROPEAN PATENT APPLICATION

(21) Application number: 81850044.9

(51) Int. Cl.³: **G 07 B 5/04**

(22) Date of filing: 13.03.81

(30) Priority: 21.03.80 GB 8009532

(71) Applicant: **AB ALMEX, S:t Göransgatan 160 B, S-112 51 Stockholm (SE)**

(43) Date of publication of application: 30.09.81 **Bulletin 81/39**

(72) Inventor: **Agren, Anders, Mossvägen 12, S-161 37 Bromma (SE)**

(74) Representative: **Lettström, Richard et al, AB DAHLS PATENTBYRA Sturegatan 4, S-114 35 Stockholm (SE)**

(84) Designated Contracting States: **AT BE CH DE FR LI SE**

(54) An arrangement in semi-automatic ticket-issuing machines provided with a memory.

(57) Semi-automatic ticket-issuing machines provided with a memory are intended to be operated e.g. on board buses during successive working periods by operators who receive cash to be accounted for later on as payment for ticket issued. In order to facilitate the operators' accounting work each ticket-issuing machine is adapted to register upon completion of each working period a cash balance record for the working period just completed on an accounting medium intended for the operator in question. This cash balance record is also stored in the memory of the ticket-issuing machine which memory is adapted to retain a first predetermined number of cash balance records relating to a corresponding number of successive working periods. According to the invention each ticket-issuing machine is adapted to register on said accounting medium intended for the operator besides said cash balance record to the working period just completed also a second predetermined number of said retained cash balance records, relating to immediately preceding working periods, said second predetermined number being at the most equal to said first predetermined number.

ACTORUM AG

COMPLETE DOCUMENT

The present invention relates to an arrangement in semi-automatic ticket-issuing machines provided with a memory, said ticket-issuing machines being intended to be operated e.g. on board buses during successive working periods by operators who receive cash to be accounted for later on as payment for tickets issued, each ticket--issuing machine being adapted to register upon completion of each working period a cash balance record for the working period just completed on an accounting medium intended for the operator in question, and to store this record in its memory which is adapted to retain a first predetermined number of cash balance records relating to a corresponding number of successive working periods.

Such ticket-issuing machines are known. The accounting medium used in these known ticket-issuing machines genereally comprises e.g. a paper strip on which the transactions made during the working period are registered and summed to obtain information about cash balance for the working period in question. At the end of the working day the operator delivers this strip together with his cash to an accounting central. These known ticket-issuing machines are adapted to store the information about cash balance in a memory provided in the respective machines. Each memory is adapted to store corresponding information for a predetermined number of immediately preceding working periods. Supposing that an operator loses or intentionally destroys his strip before the strip has been read centrally it will, thus, be possible to reconstruct the information on the lost or destroyed tape simply by going to the ticket-issuing machine in question to read its memory. This is a quite simple procedure as long as just one ticket-issuing machine is involved. However, during one and the same working day one and the same operator may operate several different ticket-issuing machines and in this connection receive a corresponding number of strips to be accounted for later on, which strips all can be lost or intentionally destroyed. In this case it will, thus, be necessary to go to all ticket-issuing machines operated by that operator to read their memories in order to be able to reconstruct the information on the lost or intentionally destroyed strips. This requires a lot of work which means that the procedure is very expensive.

The object of the present invention is to provide an arrangement that makes it possible to reconstruct the contents on a lost or intentionally destroyed specimen of the accounting medium without having to go to any ticket-issuing machine.

This is accomplished by means of the arrangement mentioned in the introduction in that each ticket-issuing machine is adapted to register on said accounting medium intended for the operator besides said record for the working period just completed also a second predetermined number of said retained cash balance records, relating to immediately preceding working periods, said second predetermined number being at the most equal to said first predetermined number.

Thus, should an operator's accounting medium from a certain ticket-issuing machine be lost or intentionally destroyed the information on the accounting medium in question can be reconstructed by means of the immediately following operators' accounting media from the same ticket-issuing machine.

The invention will be described more in detail below.

The semi-automatic ticket-issuing machine according to the invention is intended to be operated on board vehicles e.g. buses by an operator who receives cash from the passengers as payment for a fareticket. The ticket-issuing machine according to the invention is of the kind that comprises a memory in which on one hand the machine balance and on the other hand the balances for a number of successive working periods are registered. In order not to have to go to each ticket-issuing machine to read their memories at the end of a working day, the ticket-issuing machines according to the invention are in a manner known per se provided with a writing arrangement for registering the transactions during the working period in question together with the cash balance for the working period in question on e.g. a magnetic tape in a casette. Thus, when an 'operator begins his working period at a ticket-issuing machine he inserts his magnetic tape casette into a recess for the casette on the ticket--issuing machine. At the same time as the operator identifies himself e.g. by keying his employment number of the keyboard of the ticket-issuing machine the employment number will be registered on the magnetic tape within the just inserted magnetic tape casette. Then, during the working period each ticket transaction is registered on the magnetic tape. At the end of the working period the operator's balance as well as the machine balance is registered on the magnetic tape. In case the operator, then, begins a working period at another ticket-issuing machine corresponding registrations are made on the magnetic tape casette at that machine. At the end of the working day the operator delivers his magnetic tape casette together with his cash to the accounting central. Hereby, the operator's accounting work is facilitated quite essentially. The magnetic tape is namely read centrally, whereupon the operator's cash is checked off against the balance.

As mentioned in the introduction, such an accounting medium i.e. magnetic tape casette can be lost or intentionally destroyed by an operator. In that case it would be necessary to go to each ticket-issuing machine operated by the operator in question during the working day in question to read the memories of these ticket--issuing machines in order to be able to reconstruct the information on the lost or intentionally destroyed magnetic tape casette.

In order to be able to reconstruct the information on the lost or intentionally destroyed magnetic tape casette without having to go to any ticket-issuing machine at all the ticket-issuing machines according to the invention are adapted to register the information about a number of preceding operators' outgoing balances, stored in the memory of the ticket-issuing machine, also on following operators' magnetic tapes. Thus, should any operator lose or intentionally destroy his magnetic tape casette the information on this lost or destroyed casette remains stored in the memories of those machines that have been operated by the operator in question, which information, then, will be registered on the immediately following operators' magnetic tape casettes in connection with that these operators key their employment numbers. When these following operators hand in their magnetic tape casettes to the accounting central it will be possible to automatically reconstruct the information on the lost or destroyed magnetic tape casette quite easily by reading the magnetic tapes for those operators that have operated the same ticket-issuing machines as that operator who lost or destroyed his magnetic tape casette. Hereby, the possibilities of detecting accounting frauds at the ticket-issuing machines will increase essentially.

The number of balance records stored in the memory of each ticket-issuing machine can amount to e.g. 10. Thus, in that case the machine memory will comprise a group of ten memory elements that are connected in series in such a manner that the latest stored record forces the first stored record out of the group. Of course, all of these ten stored records do not have to be registered on the magnetic tapes but it can be sufficient to register five preceding balance records in order to obtain the desired control.

Instead of magnetic tape casettes it is also possible to use other media such as paper strips on which said balance records are indicated in figures.

Claim:-

An arrangement in semi-automatic ticket-issuing machines provided with a memory, said ticket-issuing machines being intended to be operated e.g. on board buses during successive working periods by operators who receive cash to be accounted for later on as payment for tickets issued, each ticket-issuing machine being adapted to register upon completion of each working period a cash balance record for the working period just completed on an accounting medium intended for the operator in question, and to store this record in its memory which is adapted to retain a first predetermined number of cash balance records relating to a corresponding number of successive working periods, characterized in that each ticket-issuing machine is adapted to register on said accounting medium intended for the operator besides said record for the working period just completed also a second predetermined number of said retained cash balance records, relating to immediately preceding working periods, said second predetermined number being at the most equal to said first predetermined number.